# EUROPEAN PATENT APPLICATION

(11) **EP 1 443 440 A1**
(43) Date of publication of application: **04.08.2004**
(21) Application number: 02779989.9
(22) Date of filing: 01.11.2002
(51) Int. Cl.: G06F 17/60

(54) **ELECTRONIC TRANSACTION SYSTEM**

(30) Priority: 02.11.2001 JP 2001337935
(71) Applicant: Sony Corporation, Tokyo 141-0001 (JP)
(72) Inventor: KAWASHIMA, Takashi SONY FINANCE INTERNATIONAL,INC., Minato-ku, Tokyo 107-0062 (JP); HASUMI, Yoshitsugu SONY FINANCE INTERNATIONAL,INC., Minato-ku, Tokyo 107-0062 (JP); HAGIWARA, Kotaro SONY FINANCE INTERNATIONAL, INC., Minato-ku, Tokyo 107-0062 (JP); HAYAASHI, Hirofumi SONY FINANCE INTERNATIONAL,INC., Minato-ku, Tokyo 107-0062 (JP)
(74) Representative: Horner, David Richard
(86) International application number: PCT/JP2002/011444
(87) International publication number: WO 2003/038706

(57) **Abstract**

If a received unique number (101) indicates a credit card that can be authorized in a server (9), the server (9) performs authorization and returns an authorization result to a computer (7). If this unique number (101) indicates a credit card that cannot be authorized in the server (9), the server (9) sends the unique number (101) to a server (11), which transfers the received unique number (101) to a server (13) of a credit card issuing company concerned. The server (13) authorizes the received unique number and sends an authorization result to the computer (7) and the server (9) via the server (11).

## Description

### Technical Field

The present invention relates to an electronic commerce system, an electronic commerce server, an electronic commerce Method, an electronic commerce program, and a recording medium storing the electronic commerce program for executing electronic commerce through networks such as the Internet. To be more specific, the present invention relates to an electronic commerce system, an electronic commerce server, an electronic commerce method, an electronic commerce program, and a recording medium storing the electronic commerce program which are capable of smoothly and securely performing electronic commerce by preventing the leakage and unauthorized usage of member information which is the credit card information such as credit card numbers, credit card expiration dates, etc.

### Background Art

With the recent rapid development of the network technologies such as the Internet, electronic commerce has become very active in which products and services are bought and sold at virtual stores on networks and their settlements are made. In the settlement methods in the current electronic commerce, it is a general practice to make settlements by means of credit cards. The settlements based on credit card in electronic commerce (this is also referred to as network credit settlements), each credit card member (hereafter referred to as a member) who is a purchaser of products and so on sends his member information to credit card member stores (hereafter referred to as a member store). The member stores include distributors of products, virtual stores on networks, and so on. The member information is the credit card information such as credit card number, credit card expiration date, etc. However, because the member information is transmitted over networks, there is a risk that the member information may be appropriated by the third party during transmission.

In order to reduce the risk of member information leakage for example and securely make network credit card settlements, protocols such as SSL (Secure Sockets Layer) and SET (Secure Electronic Transactions) are used.

SSL is a protocol associated with the security communication developed by Netscape Communications Corp., but it is not a technology developed especially for the settlements by credit card on networks. SSL is intended to securely transfer personal information and so on between the Web browser and the Web server by use of the electronic certificate based on the public key cryptography.

SSL is supported by Web browsers such as Netscape Navigator, Netscape Communicator (trademarks), and Microsoft Internet Explorer (trademark) for example and widely accepted as a protocol associated with security communication.

The following outlines the network credit card settlement based on SSL.

The Web browser of a member encrypts the member information which is the credit card information for example by use of the public key of a member store and sends the encrypted member information to the Web server of the member store. The Web server of the member store decrypts the received encrypted member information by the secret key of the member store and requests a credit card issuing company, a credit card member store managing company, and so on for the credit inquiry associated with the member (this is hereafter also referred to as authorization). Because the encrypted information is decrypted by the Web server of the member store, the risk of the leakage of the member information which is the credit card information for example to the third party, other than the member, the member store, the credit card issuing company, and the credit card member store managing company for example is reduced.

However, with SSL, the Web server of the member store can decrypt all member information for example, so that it is possible for the member store to tamper with the member's order information for example out of malice to forge sales information for example.

SET is a protocol associated with security communication developed by Visa International Service Association and MasterCard International Inc. for securely performing credit card settlement and electronic commerce on networks. With SET, basically like SSL, the electronic certificate based on public key cryptography is used to securely transfer personal information and so on between the Web browser and the Web server, the difference lying in that member information and sales information are encrypted separately. Because SET encrypts member information and sales information separately, the member store cannot decrypt all member information. This reduces the risk of tampering sales information and forging of sales information by malicious member stores.

However, with both SSL and SET, member information and so on, although encrypted, are always transferred between the member, the member store, the credit card issuing company, the credit card member store managing company, and so on over networks, so that chances and risks that member information is intercepted increase and, if the decryption procedure is leaked, there is a risk that the member information such as credit card number is also leaked.

It is therefore an object of the present invention to solve the above-mentioned problems involved in the related-art technologies by providing an electronic commerce system, an electronic commerce server, and an electronic commerce method which reduce the risks of the leakage and unauthorized use of member information which is the credit card information for example such as credit card number, credit card expiration date, and so on to enable the secure and smooth execution of electronic commerce in the credit inquiry (or the authorization) in performing credit card settlements over networks.

### Disclosure of Invention

In carrying out the invention and according to a first aspect thereof, there is provided an electronic commerce server connected to another electronic commerce server over a network, including: holding means for holding information about a credit card company which performs credit inquiry; identifying means for identifying a credit card company which performs credit inquiry on the basis of the unique number and the credit card company information if credit inquiry request information including a unique number associated with a credit card number and different from the credit number has been received from the another electronic commerce server; and transmitting means for transmitting the credit inquiry request information including the unique number to an electronic commerce server of the identified credit card company.

The electronic commerce server according to the first aspect holds, in the holding means, the information (credit card company information) of a credit card company which performs credit inquiry and, if this server receives the credit inquiry request information including the unique number from another electronic commerce server, identifies a credit card company which performs credit inquiry on the basis of the unique number and the credit card company information, sending the credit inquiry request information including the unique number to the electronic commerce server of the identified credit card company.

The electronic commerce server denotes a server or a computer which belongs to a center, a credit card company (a member store managing company, an issuing company and so on), a member (a credit card member and so on), or a member store (a member store of the credit card company) for example.

Credit inquiry (hereafter also referred to authorization) denotes a process associated with the sale to the credit card member corresponding to a particular credit card number, namely a process for determining whether the sale of a particular product is permitted to the credit card number on the basis of the expiration date or the credit limit amount of the credit card for example.

Credit card company information is the information about a credit card company which performs credit inquiry and this information includes a part of a unique number, a credit card company type (an issuing company and a member store managing company for example), a credit card company name, and an issuing company code. The issuing company and the member store managing company will be described later.

The unique number is a code sequence composed of numbers, letters, and symbols for identifying the credit card number and so on; for example, it is a 16-digit code sequence such as "A130017777788888" for example. The unique number is a code sequence which differs from a credit card number. Alternatively, a part of the unique number, the upper 6 digits for example, may be used to identify a credit card company.

Credit inquiry request information is authorization request information which is sent when credit inquiry is requested. This information includes a unique number, a credit card expiration date, a member name, a type (member type, card type, and so on), an issuing company code, a member store code, and information about products to be purchased (product code, price, sales information, and so on).

The center provides a system of each unique number corresponding to each credit card number. Also, the center performs the processing associated with the data transfer between credit card companies.

The credit card company issues credit cards, manages member stores cultivated by the credit card company, and performs authorization of the cards issued by it.

The credit card company which issued credit cards places the processes associated with other than the credit cards issued by it and the member stores cultivated by it to another credit card company.

A credit card company which issues credit cards and IC cards storing unique numbers is called an issuing company (an issuer) and a credit card company which cultivates and manages member stores is called a member store managing company (an acquirer). Authorization is performed by the issuing company or the member store managing company.

It should be noted that a member store (shop) is a credit card member store which can settle the payment with credit cards or a virtual stores on networks.

The electronic commerce server of the first aspect holds the credit card company information for associating the unique number, the issuing company for performing authorization, and so on, so that, upon reception of the credit inquiry request information including the unique number from another electronic commerce server, the electronic commerce server of the first aspect references the credit card company information and identify the credit card company which performs authorization on the basis of this unique number and transfer the credit inquiry request information including this unique number to the electronic commerce server of the identified credit card company.

In carrying out the invention and according to a second aspect thereof, there is provided an electronic commerce server connected to another electronic commerce server over a network, including: holding means for holding unique number information for credit inquiry by the electronic commerce server; determining means for determining whether to perform credit inquiry processing by the electronic commerce server on the basis of the unique number and the information in the holding means if credit inquiry request information including a unique number associated with a credit card number and different from the credit card number has been received from the another electronic commerce server; and transmitting means for transmitting the credit inquiry request information to a predetermined another electronic commerce server if the credit inquiry processing is not to be performed by the electronic commerce server.

The electronic commerce server of the second aspect holds, in the holding means, unique number information for credit inquiry by the electronic commerce server; if credit inquiry request information including a unique number has been received from the another electronic commerce server, determines whether to perform credit inquiry processing by the electronic commerce server on the basis of the unique number and the information in the holding means; and if the credit inquiry processing is not to be performed by the electronic commerce server, transmits the credit inquiry request information to a predetermined another electronic commerce server.

The unique number information is the member information to be referenced when credit inquiry is performed on the basis of a unique number and so on and has a unique number, credit card information (credit card number, credit card expiration date, credit card type, credit limit, payment form, outstanding balance, and so on) and member attribute information (name, address, telephone number, and so on).

That the credit inquiry processing is not performed (authorization is not performed) denotes that, because there is held no unique number information (member information) corresponding to the unique number of the received credit inquiry request information, this unique number does not become the object of authorization. In this case, the unique number is transferred, for authorization, to the server of the company which issued the credit card corresponding to this unique number via another predetermined electronic commerce server. In this case, this another predetermined electronic commerce server is an electronic commerce server of the center for example.

Upon reception of the credit inquiry request information including a unique number not subject to authorization from another electronic commerce server, the electronic commerce server of the second aspect can transfer this unique number to the electronic commerce server of the center for example which identifies the issuing company which performs authorization.

In carrying out the invention and according to a third aspect thereof, there is provided an electronic commerce server connected to another electronic commerce server over a network, including: holding means for holding unique number information for performing credit inquiry by the electronic commerce server; determining means for determining whether to perform credit inquiry processing by the electronic commerce server on the basis of the unique number and the information in the holding means if credit inquiry request information including a unique number associated with a credit card number and different from the credit card number has been received from the another electronic commerce server; credit inquiry processing means for performing the credit inquiry processing on the basis of the credit inquiry request information if the credit inquiry processing is to be performed by the electronic commerce server; and transmitting means for transmitting a credit inquiry result which is a processing result of the credit inquiry processing means to the another electronic commerce server.

The electronic commerce server of the third aspect holds, in the holding means, unique number information for performing credit inquiry by the electronic commerce server; if credit inquiry request information including a unique number has been received from the another electronic commerce server, determines whether to perform credit inquiry processing by the electronic commerce server on the basis of the unique number and the information in the holding means; if the credit inquiry processing is to be performed by the electronic commerce server, performs the credit inquiry processing and transmits a credit inquiry result to the another electronic commerce server.

The credit inquiry result denotes the authorization result information which is sent after credit inquiry is performed. The credit inquiry result is obtained by attaching an authorization result to the above-mentioned authorization request information (a credit inquiry request).

That credit inquiry processing is performed (authorization is performed) denotes that, because the unique number information (member information) corresponding to the unique number of the received credit inquiry request is held, this unique number becomes the object of authorization, for example. In this case, the electronic commerce server references the unique number information (member information) to perform authorization on the basis of the received credit inquiry request.

Upon reception of a credit inquiry request including the unique number to be authorized from another electronic commerce server, the electronic commerce server of the third aspect can perform authorization and send a credit inquiry result indicative of the result of authorization to this another electronic commerce server.

It should be noted that the first aspect is associated with the electronic commerce server belonging to the center and the second and third aspects are associated with the electronic commerce servers belonging to credit card companies, the member store managing company for example.

In the first, second, and third aspects, each electronic commerce server transfers a unique number instead of a credit card number, the unique number being different from the credit card number, in the processing associate with authorization, so that the risk of the leakage of personal information such as credit card number and so on by the interception on networks is reduced.

Consequently, even in the case where the issuing company performs authorization and the member store managing company manages member stores, the authorization of credit card members can be performed with security while reducing the risk of the leakage of the member information having credit card numbers and so on by the interception on networks.

It is also practicable for the electronic commerce servers of the first, second, and third aspects to decrypt the received unique number encrypted by triple-DES (Data Encryption Standard), SSL, or the like. In this case, each unique number is encrypted before being transmitted over a network, thereby further enhancing the security of the system.

In carrying out the invention and according to a fourth aspect thereof, there is provided an electronic commerce method for an electronic commerce server connected to another electronic commerce server over a network, including the steps of: holding information about a credit card company which performs credit inquiry; identifying a credit card company which performs credit inquiry on the basis of the unique number and the credit card company information if credit inquiry request information including a unique number associated with a credit card number and different from the credit number has been received from the another electronic commerce server; and transmitting the credit inquiry request information including the unique number to an electronic commerce server of the identified credit card company.

In carrying out the invention and according to a fifth aspect thereof, there is provided an electronic commerce method for an electronic commerce server connected to another electronic commerce server over a network, including the steps of: holding unique number information for performing credit inquiry by the electronic commerce server; determining whether to perform credit inquiry processing by the electronic commerce server on the basis of the unique number and the information in the holding means if credit inquiry request information including a unique number associated with a credit card number and different from the credit card number has been received from the another electronic commerce server; and transmitting the credit inquiry request information to a predetermined another electronic commerce server if the credit inquiry processing is not to be performed by the electronic commerce server.

In carrying out the invention and according to a sixth aspect thereof, there is provided an electronic commerce method for an electronic commerce server connected to another electronic commerce server over a network, including the steps of: holding unique number information for performing credit inquiry by the electronic commerce server; determining whether to perform credit inquiry processing by the electronic commerce server on the basis of the unique number and the information in the holding means if credit inquiry request information including a unique number associated with a credit card number and different from the credit card number has been received from the another electronic commerce server; performing the credit inquiry processing on the basis of the credit inquiry request information if the credit inquiry processing is to be performed by the electronic commerce server; and transmitting a credit inquiry result which is a processing result of the credit inquiry processing step to the another electronic commerce server.

In carrying out the invention and according to a seventh aspect thereof, there is provided an electronic commerce system in which a first electronic commerce server, a second electronic commerce server, and an electronic commerce server of a credit card company are interconnected over a network, wherein, the first electronic commerce server including: credit inquiry request information generating means for generating credit inquiry request information including a unique number associated with a credit card number and different from the credit number; and transmitting means for transmitting the credit inquiry request information to the second electronic commerce server, the second electronic commerce server including: holding means for holding information about a credit card company which performs credit inquiry; identifying means for identifying a credit card company which performs credit inquiry on the basis of the unique number and the credit card company information if the credit inquiry request information has been received from the first electronic commerce server; and transmitting means for transmitting the credit inquiry request information including the unique number to an electronic commerce server of the identifying credit card company.

In carrying out the invention and according to an eighth aspect thereof, there is provided and electronic commerce system in which a first electronic commerce server and a second electronic commerce server are interconnected over a network, wherein, the first electronic commerce server including: credit inquiry request information generating means for generating credit inquiry request information including a unique number associated with a credit card number and different from the credit number; and transmitting means for transmitting the credit inquiry request information to the second electronic commerce server, the second electronic commerce server including: holding means for holding unique number information for performing credit inquiry by the second electronic commerce server; determining means for determining whether to perform credit inquiry processing by the second electronic commerce server on the basis of the unique number and the information in the holding means if credit inquiry request information has been received from the first electronic commerce server; transmitting means for transmitting the credit inquiry request information to a predetermined another electronic commerce server if the credit inquiry processing is not to be performed by the second electronic commerce server; credit inquiry processing means for performing credit inquiry processing on the basis of the credit inquiry request information if the credit inquiry processing is to be performed by the second electronic commerce server; and transmitting means for transmitting a credit inquiry result which is a processing result of the credit inquiry processing means to the first electronic commerce server.

In carrying out the invention and according to a ninth aspect thereof, there is provided a program for causing a computer to function as the electronic commerce server recited in any one of the first aspect through the third aspect.

In carrying out the invention and according to a tenth aspect thereof, there is provided a recording medium recording a program for causing a computer to function as the electronic commerce server recited in any one of the first aspect through the third aspect.

The above-mentioned program may be distributed over networks or in the recording medium.

### Brief Description of Drawings

FIG. 1 is a schematic diagram illustrating an electronic commerce system 1;
FIG. 2 shows member information table 15a and member information table 19a;
FIG. 3 illustrates a system of unique number 101;
FIG. 4 shows member store information table 15b;
FIG. 5 shows credit card company information table 17a;
FIG. 6 shows authorization request information 35;
FIG. 7 shows authorization result information 37;
FIG. 8 is a flowchart describing operation of the computers 5 and 7 and servers 9, 11, and 13;
FIG. 9 is a flowchart describing operation of the computers 5 and 7 and the servers 9, 11, and 13; and
FIG. 10 is a flowchart describing operation of the computers 5 and 7 and the servers 9, 11, and 13.

### Best Mode for Carrying out the Invention

### [First embodiment]

The following describes in detail a first embodiment of the present invention with reference to drawings.

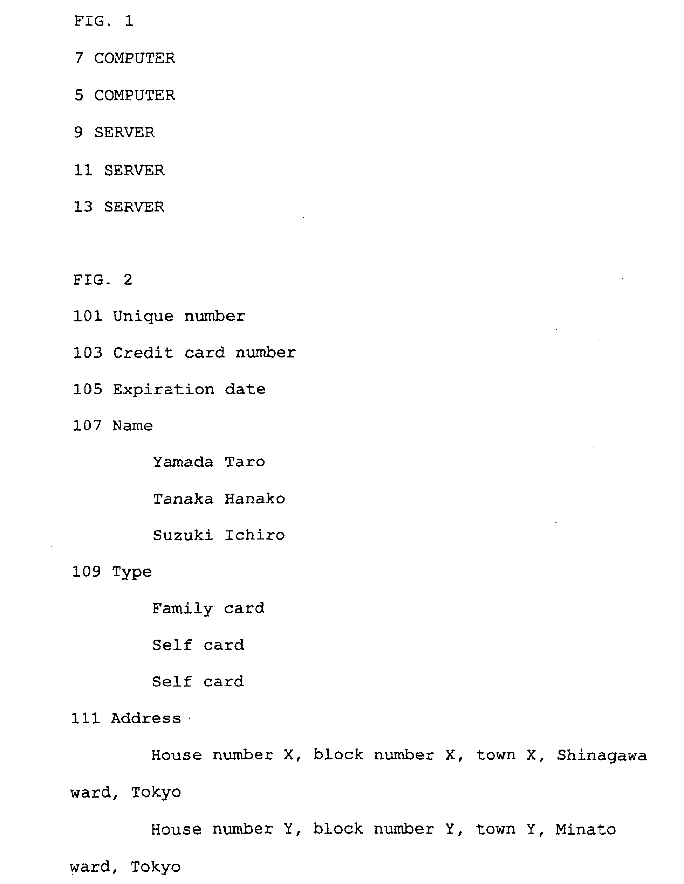

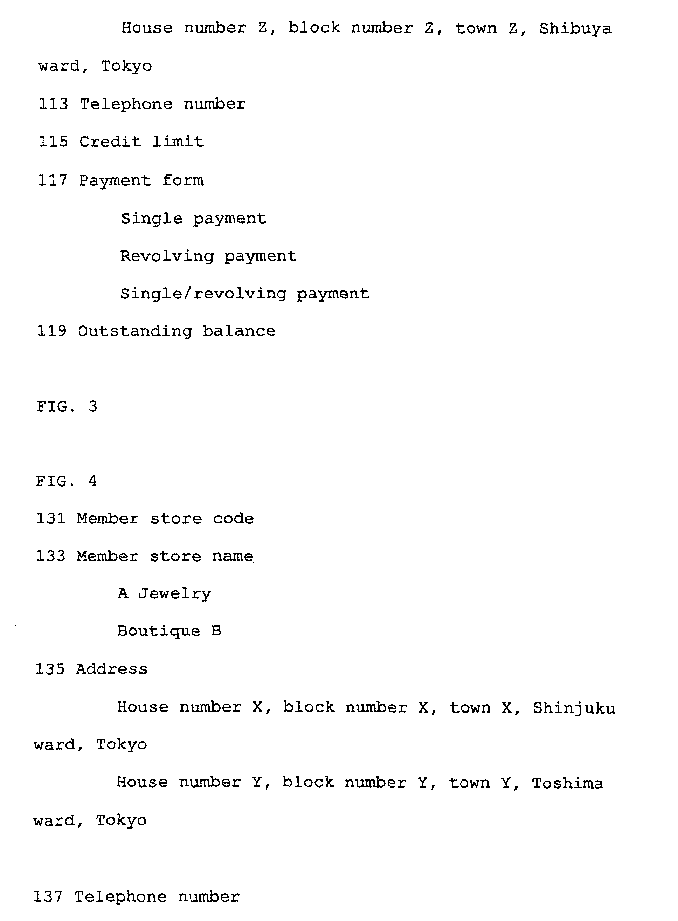

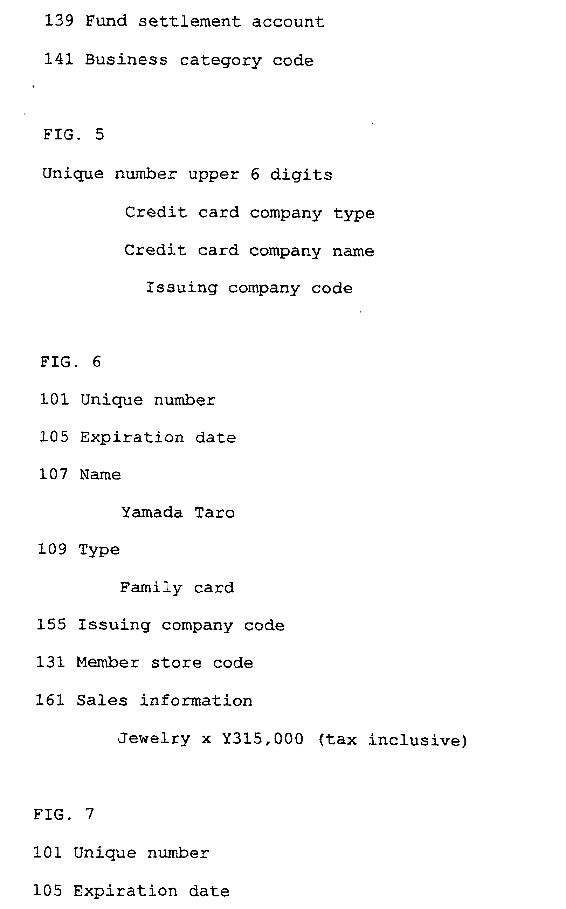

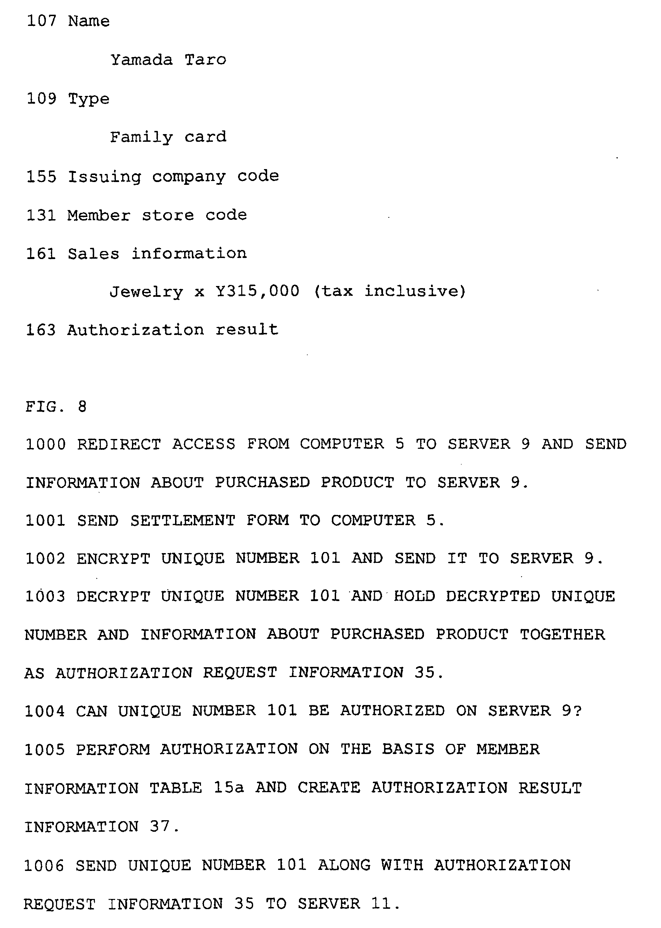

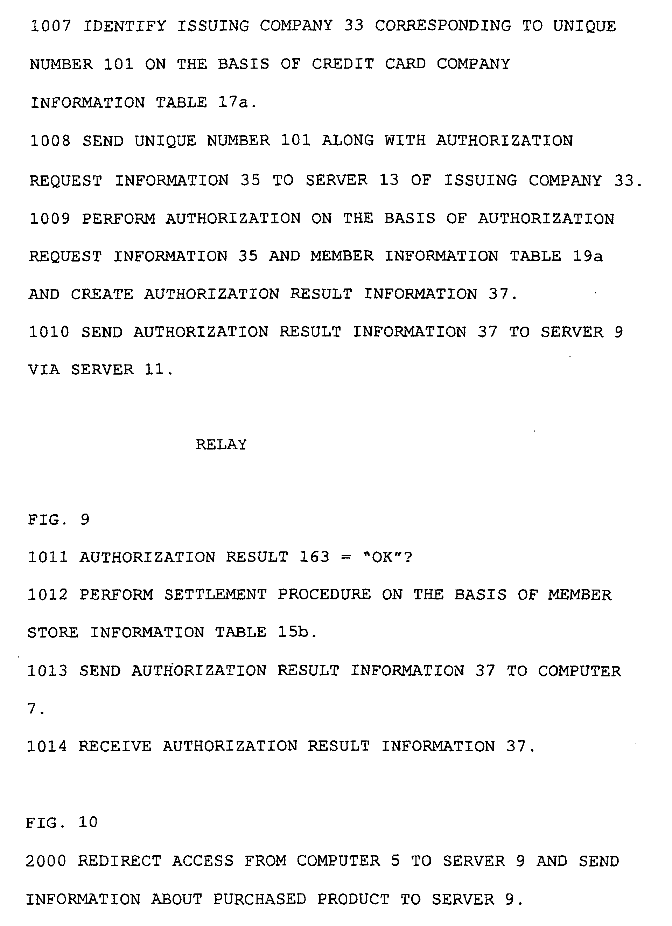

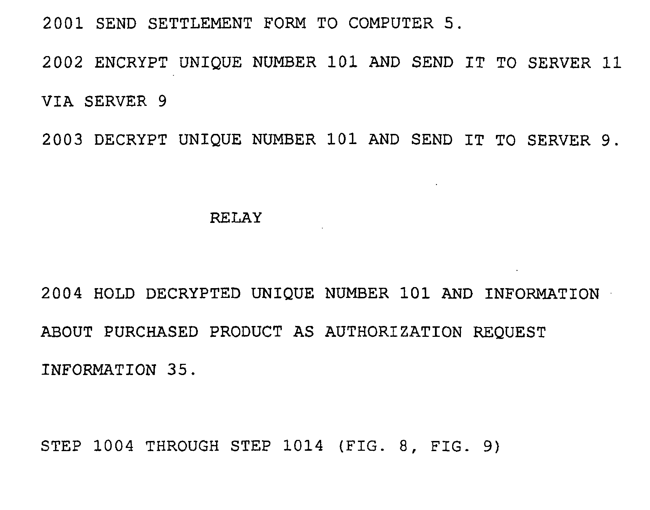

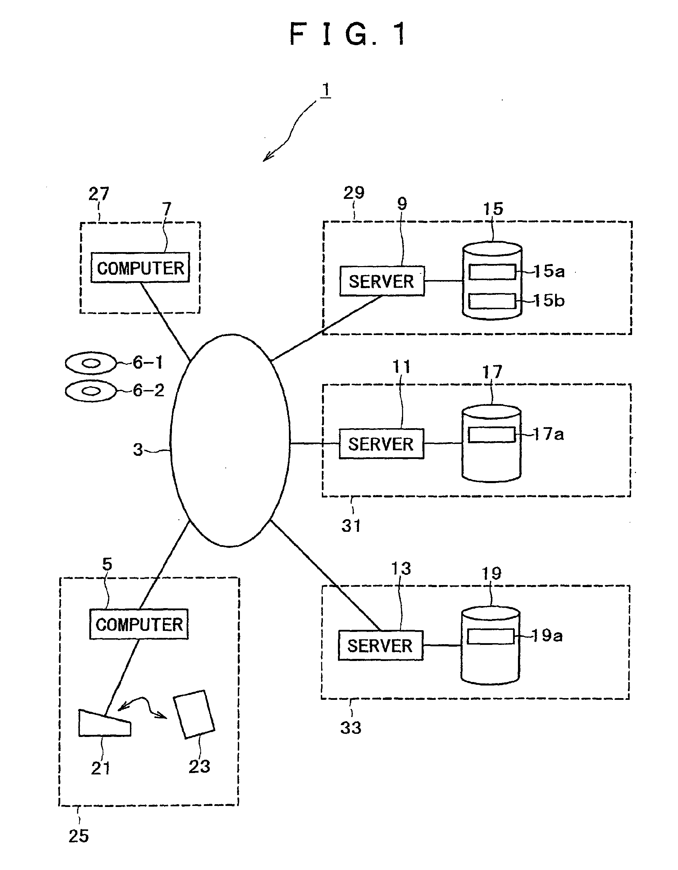

FIG. 1, is a schematic diagram illustrating an electronic commerce system 1 practiced as a first embodiment of the invention.

A member 25 is a member of a credit card issued by an issuing company 33 and owns an IC card 23 having the capabilities of the credit card. A member store 27 is a credit card member store that can make settlements by the credit card issued by the issuing company 33 and runs a virtual store on a network for example. A member store managing company 29 manages and cultivates the member store 27 and performs authorization (credit inquiry) for example. The member store managing company 29 is also referred to as an acquirer. The issuing company 33 issues the IC card 23 storing a credit card number, a unique number, and so on and performs authorization (credit inquiry). The issuing company 33 is also referred to as an issuer. In what follows, the member store managing company 29 and the issuing company 33 are generically referred to as credit card companies.

It should be noted that authorization (credit inquiry) denotes a process associated with the sale to the credit card member corresponding to a particular credit card number, namely a process for determining whether the sale of a product is permitted to the credit card number on the basis of the expiration date or the credit limit amount of the credit card for example.

A center 31 provides means for assigning a unique number corresponding to each credit card number and executes processing associated with the transfer of data between the credit card companies such as the member store managing company 29 and the issuing company 33 associated with the IC card 23 concerned. The details of the unique number will be described later.

To a network 3, the computers 5 and 7 and the servers 9, 11, and 13 are connected.

Regardless of being wired or not, the network 3 operates so that, upon establishment of a session between a device connected to the network 3 and a destination device, information may be transferred between these devices. Hence, the network 3 is depicted in FIG. 1 as being connected with one main line; however, the network 3 may be a combination of networks as with the Internet, in which the networks are interconnected with gateways. With respect to the connection of networks, instead of the direct connection to the main line called a backbone, the temporary connection based on PPP (Point-to-Point Protocol) connection may be used as long as information can be transferred upon the establishment of a session.

The computer 5 is a computer operating as a terminal device of the member 25 and is constituted by a personal computer, a portable information terminal, or a mobile telephone capable of information transfer over a network, for example. The computer 5 is configured to transfer information over the network 3 by use of its own communication capabilities or a Web browser application installed additionally. Further, the computer 5 has a capability of encrypting data with SSL for example and sending the encrypted data to the network 3.

The computer 5 is connected to a reader/writer (reading/writing device) 21. The reader/writer 21 reads/writes various data on the IC card 23, encrypts the data read from the IC card 23 by triple-DES for example, and sends the encrypted data to the computer 5.

The IC card 23 has an IC chip (not shown). The IC card 23 has credit card capabilities, containing the member information which is the credit card information such as credit number and credit card expiration date, and the unique number, for example. Therefore, this IC card, used along with the reader/writer 21, may function as a credit card. The details of the member information and the unique number will be described later.

To the specific methods of reading/writing data on the IC card 23 by the reader/writer 21, known methods are suitably applicable. For example, if the IC card 23 is of non-contact type, the reader/writer 21 reads/writes data on the IC card 23 by means of radio wave for example; correspondingly, the IC card 23 has an antenna section for receiving radio wave for example and performs the transfer of various information held in the IC chip through this antenna section and an incorporated send/receive section. If the IC card 23 is a contact-type IC card, the reader/writer 21 has a contact section which comes in direct contact with a contact section of the IC card 23, thereby performing the transfer of various information through these contact sections.

The computer 7 is a computer for example functioning as a terminal device of the member store 27 and is constituted by a personal computer, a portable information terminal, or the like. Preferably, the computer 7 has the capabilities of sending various information to the computer 5 in response to the access from the computer 5 and redirecting the access from the computer 5 to the other computer or another server as required. Therefore, it is preferably for the computer 7 to have the capabilities of a so-called Web server. In addition, the computer 7 creates and sends authorization request information 35 including member information and sales information (sold product names, sales amounts, and so on), thereby requesting the other computer or another server for authorization (credit inquiry).

The server 9 is constituted by a computer for example of the member store managing company 29. In response to the access (for data redirection) from the other computer 5, the server 9 had the capabilities of sending various information to the computer 5 and redirecting the access from the computer 5 to the other computer or another server as required. Therefore, it is preferable for the server 9 to have the capabilities of a so-called Web server. Also, the server 9 has a database 15 storing member information table 15a, a member store information table 15b, and so on, thereby performing authorization associated with authorization request information 35 based on the member information table 15a and performing a settlement procedure for making settlements with the member store 27 on the basis of the member store information table 15b. The details of the member information table 15a and the member store information table 15b will be described later.

The server 13 is constituted by a computer for example of the issuing company 33. The server 13 has a database 19 storing a member information table 19a and so on, thereby performing authorization associated with authorization request information 35 on the basis of the member information table 19a. The details of the member information table 19a will be described later.

The server 11 is constituted by a computer for example of the center 31. The server 11 has a database 17 storing a credit card company information table 17a and, on the basis of the credit card company information table 17a, sends the authorization request information 35 to the issuing company 33 which performs authorization. The details of the credit card company information table 17a will be described later.

In the above-mentioned configuration, a plurality of computers for example and a plurality of servers for example may operate in an integrated manner, thereby forming the computers 5 and 7 and the servers 9, 11, and 13. In this case, it is preferable for each of the computers for example to have a part of the capabilities of the computer 5 for example or use a method such as time division processing, thereby performing simultaneous processing (in a pseudo manner). In the case wherein the member store managing company 29 and the issuing company 33 for example are integrated, one server may operate as the server 9 and the server 13.

The programs for making the computers 5 and 7 and the servers 9, 11, and 13 execute processing and the data to be held and recorded in the servers 9, 11, and 13 may be stored in the recording media such as a CD-ROM 6-1 and a CD-ROM 6-2 and these programs may be distributed as stored in these CD-ROM 6-1 and CD-ROM 6-2. Alternatively, these programs and data may be distributed over the network 3.

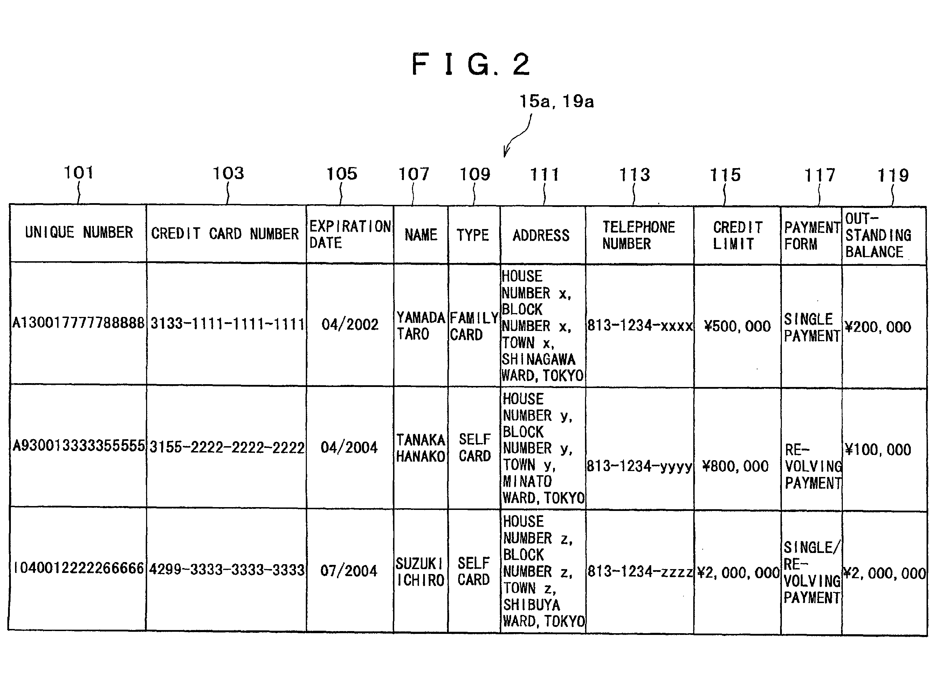

FIG. 2 shows the member information table 15a and the member information table 19a stored in the database 15 and the database 19. These member information tables 15a and 19a store the information for use in authorization. In the present embodiment, the member information table 15a stored in the database 15 and the member information table 19a stored in the database 19 have common fields. In what follows, only the common portions of the member information table 15a (or the member information table 19a) will. be described.

The member information table 15a and the member information table 19a each have fields such as a unique number 101, a credit card number 103, an expiration date 105, a name 107, a type 109, an address 111, a telephone number 113, a credit limit 115, a payment form 117, and an outstanding balance 119.

The unique number 101 is a code sequence composed of numbers, letters, and symbols for identifying the credit card number and so on; for example, it is a 16-digit code sequence such as "A130017777788888" for example. Preferably, the unique number 101 is a code sequence different from the credit card number.

The credit card number 103 is a number for identifying a credit card issued by the issuing company 33; normally, this number is assigned as an unique number to each credit card when it is issued by the issuing company 33. The expiration date 105 denotes the expiration date of each credit card; for example, "04/2002" denotes that this credit card is valid until April, 2002. The name 107 denotes the name of the owner of each credit card, "Yamada Taro" for example.

The type 109 denotes the type of each credit card, "family card," "self card," "general card," "gold card," and so on for example. The address 111 denotes the address and so on of the owner of each credit card, "house number X, block number X, town X, Shinagawa ward, Tokyo" for example. The telephone number 113 denotes the telephone number of the owner of each credit card, "813-1234-xxxx" for example.

The credit limit 115 denotes the amount of money which can be settled by the credit card in a predetermined period; for example, "Y500,000" denotes that up to 500,000 yen may be settled by this credit card in one month. The payment form 117 denotes the form in which payment is made by using the credit card; for example, "single payment" is dedicated to single payment, "revolving payment" is dedicated to revolving payment, and "single payment/revolving payment" denotes that any one of the payment forms is practicable. Revolving payment denotes that a certain amount corresponding to the outstanding balance is paid monthly. The outstanding balance 119 denotes an amount used by use of the credit card; for example, "Y200,000" denotes the payment of 200,000 yen.

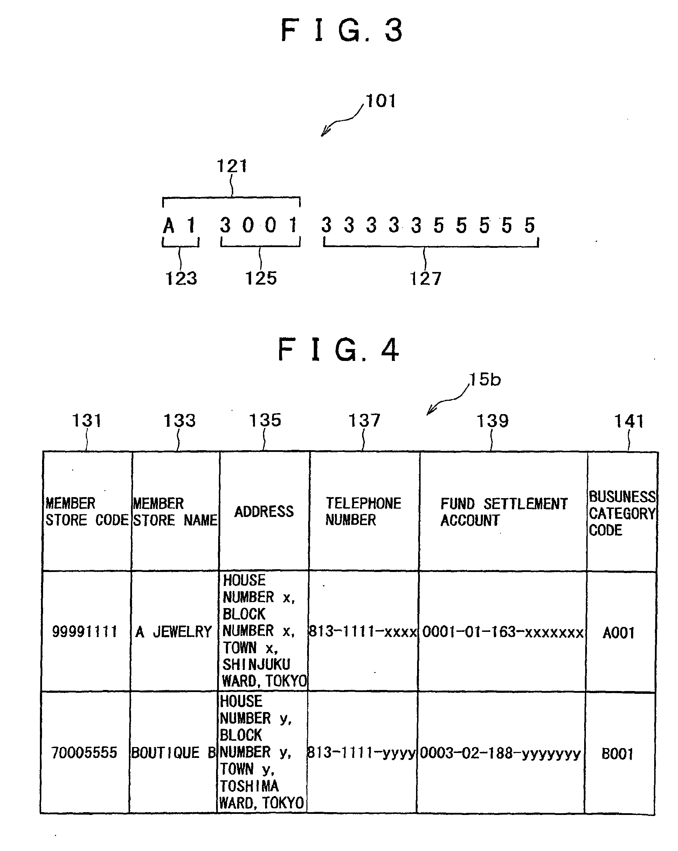

FIG. 3, is an exemplary system of the unique number 101.

If the unique number 101 is 16 digits long for example, it is configured by an upper 2 digits 123, a middle 4 digits 125, and a lower 10 digits 127.

A unique number upper 6 digits 121 are a code sequence such as numbers, letters, and symbols composed of the unique number upper 2 digits 123 and the unique number middle 4 digits 125, thereby identifying a credit card company. The unique number upper 2 digits 123 is a code sequence composed of numbers, letters, and symbols, thereby identifying the center 31 which issued the IC card 23. The unique number middle 4 digits 125 is a code sequence composed of numbers, letters, and symbols, thereby identifying the issuing company 33. The unique number lower 10 digits 127 are code sequence composed of numbers, letters, and symbols, which is assigned in a random manner.

This unique number 101 is a unique code sequence for identifying the owner of each credit card and is stored in the credit card, namely, in the IC chip of the IC card 23 in a manner so that it cannot be rewritten by the user of this credit card. The unique number 101 is stored in the IC chip in a rewritable manner so that the unique number 101 becomes unique to each credit card when it (the IC card 23) is issued.

FIG. 4, is the member store information table 15b stored in the database 15.

The member store information table 15b is the information for use in making settlements between the member store 27 and each credit card company and has fields such as a member store code 131, a member store name 133, an address 135, a telephone number 137, a fund settlement account 139, and a business category code 141.

The member store code 131 is a code sequence composed of numbers, letters, and symbols and the member store 27 is identified by this member store code 131. One example of the member store code 131 is "99991111." the member store name 133 is the name of the member store 27, "A Jewelry" for example. The address 135 is the address of the member store 27, "house number X, block number X, town X, Shinjuku ward, Tokyo" for example. The telephone number 137 is the telephone number of the member store 27, "813-1111-xxxx" for example. The fund settlement account 139 denotes the fund settlement account of the member store 27, "0001-01-163-xxxxxxx" and "Bank A, Branch B, general account XXXXXXX" for example. The business category code 141 denotes the business category of the member store 27; "A001" denotes the jewelry dealer for example.

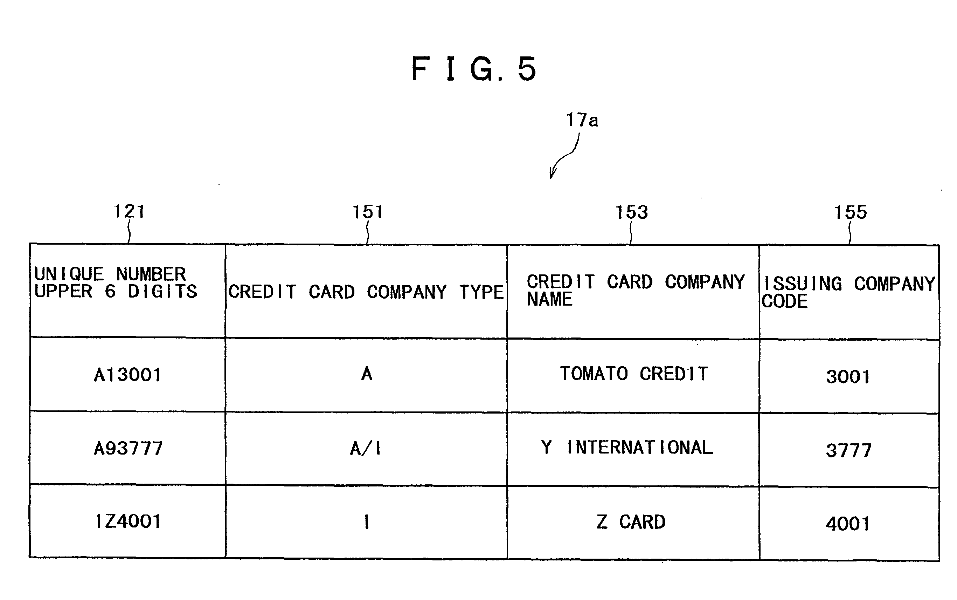

FIG. 5, is the credit card company information table 17a stored in the database 17.

The credit card company information table 17a provides the information of use in identifying for example credit card companies which are the member store managing company 29 and the issuing company 33 for example and has fields such as a unique number upper 6 digits 121, a credit card company type 151, a credit card company name 153, and an issuing company code 155.

The unique number upper 6 digits 121 is the same as the unique number upper 6 digits 121 shown in FIG. 3, namely a code sequence for identifying a credit card company. The credit card company type 151 denotes the type of a credit card company; for example, "A" denotes that this credit card company is the member store managing company 29 (acquirer), "I" denotes that this credit card company is the issuing company 33 (issuer), and "A/I" denotes that this credit card company is both the issuing company 33 (issuer) and the member store managing company 29 (acquirer) in an integrated manner. The credit card company name 153 denotes the name of a credit card company, "Tomato Credit," "Y International," or "Z Card" for example. The issuing company code 155 is a code sequence for identifying the issuing company 33 which issues credit cards, "3001" for example. The issuing company code 155 may be the unique number middle 4 digits 125 shown in FIG. 3.

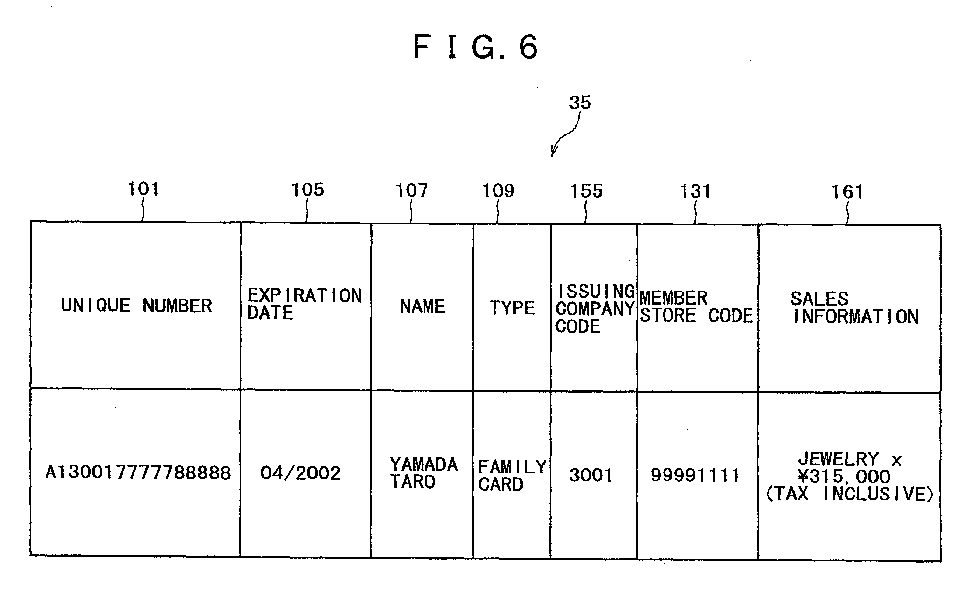

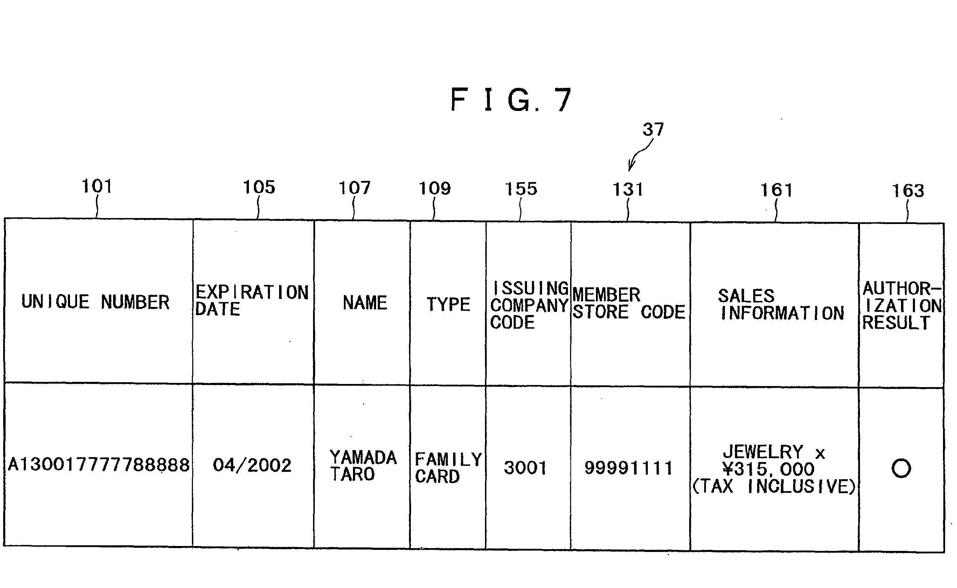

FIG. 6, is the authorization request information 35, and FIG. 7, is authorization result information 37.

The authorization request information 35 is created and sent when the computer 7 (the member store 27) for example requests authorization and is used for authorization. Also, the authorization result information 37 indicates the result of authorization.

The authorization request information 35 has fields such as a unique number 101, an expiration date 105, a name 107, a type 109, an issuing company code 155, a member store code 131, and sales information 161. The authorization result information 37 has fields such as a unique number 101, an expiration date 105, a name 107, a type 109, an issuing company code 155, a member store code 131, a sales information 161, and an authorization result 163.

The unique number 101, the expiration date 105, the name 107, and the type 109 are the same as the unique number 101, the expiration date 105, the name 107, and the type 109 of the member information table 15a and the member information table 19a (FIG. 2). The issuing company code 155 is the same as the issuing company code 155 of the credit card company information table 17a (FIG. 5). The member store code 131 is the same as the member store code 131 of the member store information table 15b (FIG. 4). The sales information 161 indicates the name of a product to be purchased by the member, the price of this product, the tax on the purchase, and so on; "Jewelry X Y315,000 (tax inclusive)" for example.

The authorization result 163 indicates the result of an authorization operation, namely whether credit has been made or not. For example, "O" indicates that credit has been made, "X" indicates that credit has not been made, and "Δ" denotes the pending of credit making. If it results the pending of credit making, the member store 27 inquires the a credit card company directly by telephone for example. It should be noted that the authorization result 163 may have the information indicative of the reason why credit has not been made.

The following describes operation of the electronic commerce system 1 in the first embodiment of the present invention. In the first embodiment, the unique number 101, which is encrypted, is decrypted by the server 9 (the member store managing company 29).

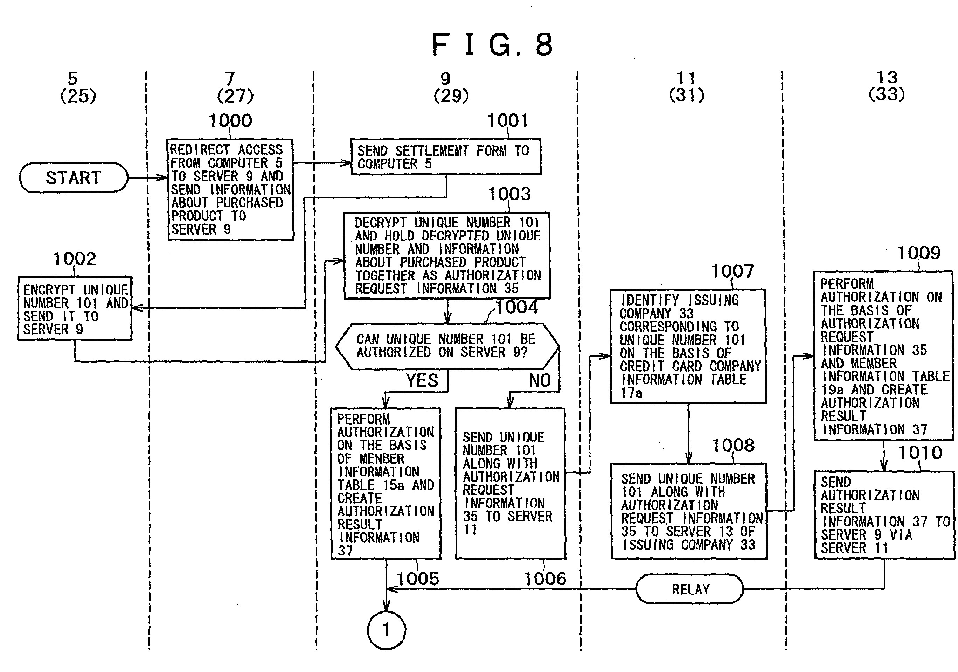

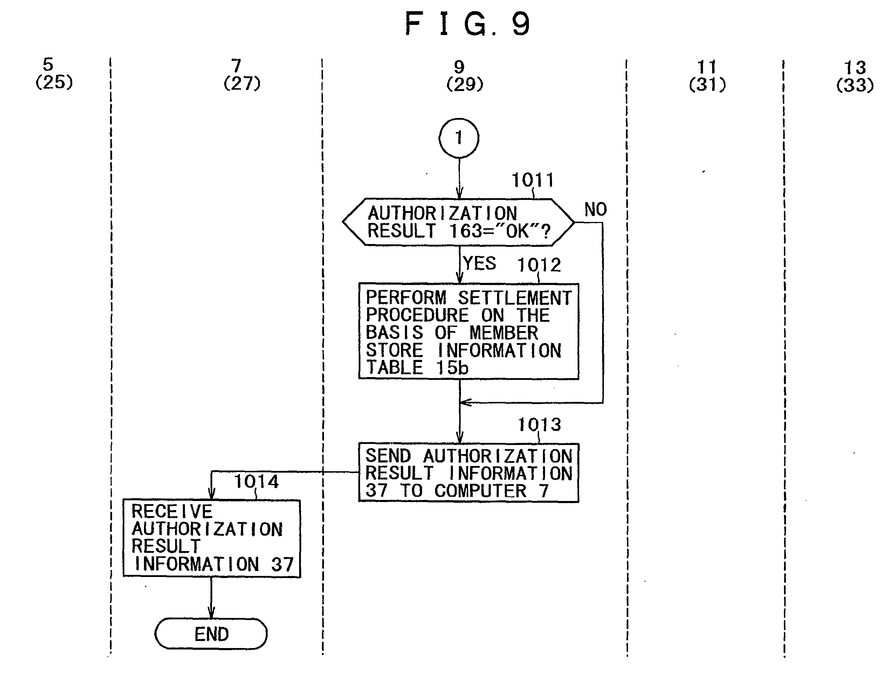

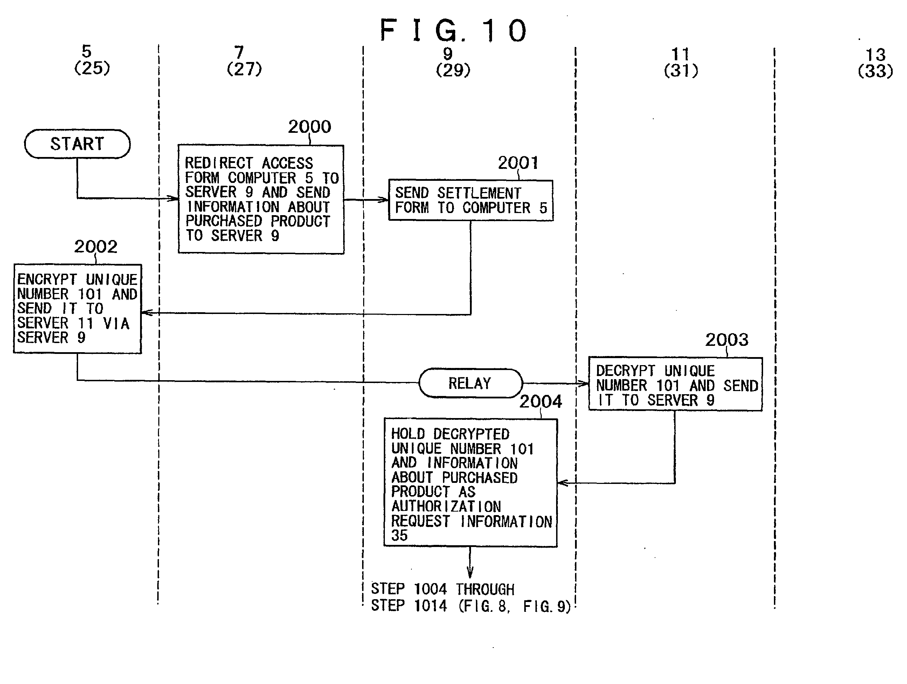

FIGS. 8 and 9, are flowcharts describing operation of the computers 5 and 7 and the servers 9, 11, and 13.

The computer 5 (the member 25) accesses the site of the member store 27 (the computer 7) to browse products of the member store 27 and, if the member 25 consequently desires to purchase a product of the member store 27, the member 25 selects a payment form (by credit card, electronic money, cash, or debit card, for example). If the credit card is selected for the payment form and the credit card company of this service is selected, the browser of the computer 5 is redirected from the site of the member store 27 (the computer 7) to the settlement form of the server 9. In this redirection, the computer 7 (the member store 27) requests the server 9 for the sale and sends the information about the product to be purchased (product code, price, etc.) to the server 9 (step 1000).

The server 9 displays a screen for credit settlement (for example, a screen for displaying a message for holding the IC card 23 up over the reader/writer 21) on the computer 5 (step 1001).

The member 25 (the user) holds the IC card 23 up over the reader/writer 21. The computer 5 reads the unique number 101 and the expiration date 105 from the IC card 23 through the reader/writer 21. At this moment, the reader/writer 21 encrypts the unique number 101 and the expiration date 105 with triple-DES before sending them to the computer 5. The computer 5 further encrypts, by use of SSL, the unique number 101 and the expiration date 105 encrypted with triple-DES and sends the resultant data to the server 9 over the network 3. In this case, in order to prevent spoofing, the personal information (for example, telephone number, address, and name expressed in kana) of the member 25 (the user) may be input (step 1002).

It should be noted that, in step 1002, the server 9 displays a pop-up screen on the screen of the computer 5 to make the member 25 (the user) input the personal information (for example, telephone number, address, and name expressed in kana) of the personal information every time credit making is requested. As with the unique number 101 and the expiration date 105, the input personal information is also checked for validity by referencing the member information table 15a and the member information table 19a. Thus, by inputting the personal information every time credit making is performed, the spoofing by a party who obtained the credit card of the member 25 in an unauthorized manner can be prevented.

The server 9 (the member store managing company 29) decrypts the received encrypted unique number 101. The server 9 holds the information (for example, product code and price) about the product to be purchased received from computer 7 and the unique number 101 and the expiration date 105 received from the computer 5 and decrypted in an correlated manner as the authorization request information 35 (step 1003).

If the unique number 101 is found to be a credit card which can be authorized on the server 9, namely, if the server 9 holds member information table 15a corresponding to the unique number 101 (YES in step 1004), then the server 9 performs authorization on the basis of the member information table 15a and the authorization request information 35 and creates the authorization result information 37 (step 1005).

If the unique number 101 is found to be a credit data which cannot be authorized, namely, if the server 9 does not hold the member information table 15a corresponding to the unique number 101 (NO in step 1004), then the server 9 sends the decrypted unique number 101 and authorization request information 35 to the server 11 (step 1006).

The server 11 (the center 31) extracts the unique number upper 6 digits 121 and issuing company code 155 corresponding to the unique number 101 on the basis of the credit card company information table 17a to identify the issuing company 33 which performs authorization (step 1007). Next, the server 11 sends the decrypted unique number 101 and authorization request information 35 to the server 13 which belongs to the issuing company 33 which performs authorization (step 1008).

The server 13 (the issuing company 33) performs authorization on the basis of the member information table 19a and the authorization request information 35 and creates the authorization result information 37 (step 1009). Then, the server 13 sends the authorization result information 37 to the server 9 via the server 11 (step 1010). It should be noted that the server 13 may directly send the authorization result information 37 to the computer 7 or the server 9.

If the authorization result 163 of the authorization result information 37 is "O" (credit made) (YES in step 1011), then the server 9 performs the settlement procedure associated with the member store 27 on the basis of the member store code 131 and sales information 161 in the authorization request information 35 and the member store code 131 and fund settlement account 139 in the member store information table 15b (step 1012). Next, the server 9 sends the authorization result information 37 to the computer 7 (step 1013).

The computer 7 receives the authorization result information 37 and displays the authorization results on a screen (not shown) on the basis of the authorization result 163 in the authorization result information 37 (step 1014).

Having gone through the above-mentioned processes, the computer 5 (the member 25) encrypts the unique number 101 and sends it to the server 9. The server 9 (the member store managing company 29) decrypts the received encrypted unique number 101. Then, if the decrypted unique number 101 is found to be of a credit card which can be authorized on the server 9, the server 9 performs authorization and sends the authorization result to the computer 7.

If the unique number 101 is found to be of a credit card which cannot be authorized on the server 9, the server 9 sends the decrypted unique number 101 and so on to the server 11. The server 11 (the center 31) identifies the server 13 of the credit card issuing company concerned and transfers the decrypted unique number 101 and so on to the server 13. The server 13 (the issuing company 33) performs authorization and sends the authorization result to the computer 7 via the server 9, the server 11, and so on. It should be noted that the server 13 may send the authorization result directly to the computer 7.

In the above-mentioned authorization processing, the computers 5 and 7 and the servers 9, 11, and 13 transfers unique numbers which are different from credit card numbers, thereby reducing the risk of the leakage of the member information such as credit card numbers by the interception on networks.

In addition, in the first embodiment (the decryption by the acquirer), the time necessary for credit making processing is shorter than that in the second embodiment (the decryption by the center) to be described later, so that the first embodiment is more efficient than the second embodiment with respect to credit making processing.

### [Second embodiment]

The following describes operation of the electronic commerce system 1 in the second embodiment of the present invention with reference to FIG. 10. In the above-mentioned first embodiment, the encrypted unique number 101 is decrypted by the server 9 (the member store managing company 29). In the second embodiment, the encrypted unique number 101 is decrypted by the server 11 (the center 31).

FIG. 10 is a flowchart showing operation of the computers 5 and 7 and the servers 9, 11, and 13.

The computer 5 (the member 25) accesses the site of the member store 27 (the computer 7) to browse products of the member store 27 and, if the member 25 consequently desires to purchase a product of the member store 27, the member 25 selects a payment form (by credit card, electronic money, cash, or debit card, for example). If the credit card is selected for the payment form and the credit card company of this service is selected, the browser of the computer 5 is redirected from the site of the member store 27 (the computer 7) to the settlement form of the server 9. In this redirection, the computer 7 (the member store 27) requests the server 9 for the sale and sends the information about the product to be purchased (product code, price, etc.) to the server 9 (step 2000).

The server 9 displays a screen for credit settlement (for example, a screen for displaying a message for holding the IC card 23 up over the reader/writer 21) on the computer 5 (step 2001). It should be noted that the processes of step 2000 and step 2001 are the same as those of step 1000 and step 1001.

The member 25 (the user) holds the IC card 23 up over the reader/writer 21. The computer 5 reads the unique number 101 and the expiration date 105 from the IC card 23 through the reader/writer 21. At this moment, the reader/writer 21 encrypts the unique number 101 and the expiration date 105 with triple-DES before sending them to the computer 5. The computer 5 further encrypts, by use of SSL, the unique number 101 and the expiration date 105 encrypted with triple-DES and sends the resultant data to the server 11 by either through server 9 or directly over the network 3. In this case, in order to prevent spoofing, the personal information (for example, telephone number, address, and name expressed in kana) of the member 25 (the user) may be input (step 2002).

It should be noted that, in step 2002, the server 9 displays a pop-up screen on the screen of the computer 5 to make the member 25 (the user) input the personal information (for example, telephone number, address, and name expressed in kana) of the personal information every time credit making is requested. As with the unique number 101 and the expiration date 105, the input personal information is also checked for validity by referencing the member information table 15a and the member information table 19a. Thus, by inputting the personal information every time credit making is performed, the spoofing by a party who obtained the credit card of the member 25 in an unauthorized manner can be prevented.

The server 11 (the center 31) decrypts the received encrypted unique number 101 and sends the decrypted unique number 101 to the server 9 (step 2003). The server 9 holds the information (for example, product code and price) about the product to be purchased and the unique number 101 and the expiration date 105 received from the computer 7 and decrypted in an correlated manner as the authorization request information 35 (step 2004).

After step 2004, the processes of step 1004 through step 1014 are executed (FIGS. 8 and 9).

Thus, in the above-mentioned first embodiment, the encrypted unique number 101 and so on are decrypted in the server 9 (the member store managing company 29), but, in the second embodiment, the encrypted unique number 101 and so on are decrypted in the server 11 (the center 31) before being sent to the server 9.

In the second embodiment, the encryption processing by the server 9 is carried out by the server 11, so that the load of the server 9 is mitigated, thereby in turn mitigating the cost of the new installation of the server 9 by the member store managing company 29. In addition, the procedures for decryption, the decryption keys, and so on may be managed by the server 11 (the center 31) in a centralized manner, thereby enhancing the security of the system.

The present invention is not limited to the details of the above described preferred embodiments. The scope of the invention is defined by the appended claims and all changes and modifications as fall within the equivalence of the scope of the claims are therefore to be embraced by the invention

In the above-mentioned first and second embodiments, the computer 7 (the member store 27), the server 9 (the member store managing company 29), the server 11 (the center 31), the server 13 (the issuing company 33) and so on are interconnected via networks 3 such as the Internet; it will be apparent that these components may be interconnected leased lines, OBN (Open Business Network), or Internet VPN (Virtual Private Network) for example.

OBN is a business-only IP (Internet Protocol) which is separated from the Internet and may realize high-security, wideband high-speed communication competing leased lines. Internet VPN is a service by which the Internet may be used like a dedicated network.

In the above-mentioned first and second embodiments, the data transmission between the computer 5 (member 25) and the server 9 (member store managing company 29) is performed by use of SSL and triple-DES. In the data transmission between the computer 7 (the member store 27), the server 9 (the member store managing company 29), the server 11 (the center 31), and the server 13 (the issuing company 33), SSL and triple-DES may also be used to enhance the security of the system.

In the above-mentioned first and second embodiments, the server 13 (issuing company 33) sends the authorization result information 37 to the server 9 (step 1010), the server 9 (member store managing company 29) performs the settlement procedure and so on (steps 1012 and so on) and then sends the authorization result information 37 to the computer 7, the computer 7 (the member store 27) receives this authorization result information 37 (steps 1011 through 1014). Alternatively, the server 13 (the issuing company 33) may send the authorization result information 37 directly to the computer 7.

In this case, the server 9 (the member store managing company 29) may perform the settlement processing and procedure and so on (steps 1012 and so on) after receiving the request for the continuation of the settlement processing from the computer 7 (the member store 27) which received the authorization result information 37.

In the above-mentioned first and second embodiments, the server 9 (member store managing company 29) has the member information table 15a to perform authorization and the server 13 (the issuing company 33) has the member information table 19a to perform authorization. It is also practicable that the server 11 (the center 31) may have the member information to perform the processing associated with authorization otherwise performed by the server 9 or the server 13.

In this case, the loads of the server 9 and the server 13 may be mitigated, so that the member store managing company 29 may mitigate the cost of the new installation of the server 9 and the issuing company 33 may mitigate the cost of the new installation of the server 13.

In the above-mentioned second embodiment, the server 11 (the center 31) decrypts the unique number 101 and so on (step 2003) and sends the decrypted unique number 101 and so on to the server 9 (step 2004), which determines whether the unique number 101 and so on may be authorized on the server 9 (step 1004). Alternatively, the server 11 may decrypt the unique number 101 and so on (step 2003) to identify a credit card company which may perform the authorization of the unique number 101 and so on based on the credit card company information table 17a and send the unique number 101 and so on to the server belonging to this credit card company.

In this case, the credit card company information table 17a may have the information indicative of a credit card company on which authorization may be made, namely the information indicative whether authorization may be made on any one of the member store managing company 29 and the issuing company 33 indicated by the unique number 101.

Consequently, the determination whether the authorization of the unique number 101 may be made on the server 9 (the member store managing company 29) need not be performed, thereby mitigating the load of the server 9.

In addition, because the unique number 101 which may be authorized on the server 9 is sent from the server 11, the server 9 need not return the unique number 101 to the server 11. Therefore, the chance of the transmission of the unique number 101 over networks is reduced, thereby enhancing the security of the system.

### Industrial Applicability

As described and according to the invention, there are provided an electronic commerce system, an electronic commerce server, and an electronic commerce method that reduce the risks of the leakage of the member information such as credit card numbers and the unauthorized usage thereof and perform electronic commerce in a secure and smooth manner in the authorization (credit inquiry) processing in performing settlements with credit cards for example on networks.

## Claims

1. An electronic commerce server connected to another electronic commerce server over a network, comprising:
holding means for holding information about a credit card company which performs credit inquiry;
identifying means for identifying a credit card company which performs credit inquiry on the basis of a unique number and said credit card company information if credit inquiry request information including a unique number associated with a credit card number and different from said credit number has been received from said another electronic commerce server; and
transmitting means for transmitting said credit inquiry request information including said unique number to an electronic commerce server of the identified credit card company.

2. The electronic commerce server according to claim 1 wherein said unique number is encrypted, said electronic commerce server further comprising decrypting means for decrypting said encrypted unique number.

3. The electronic commerce server according to claim 1 is connected to a center.

4. An electronic commerce server connected to another electronic commerce server over a network, comprising:
holding means for holding unique number information for credit inquiry by said electronic commerce server;
determining means for determining whether to perform credit inquiry processing by said electronic commerce server on the basis of said unique number and the information in said holding means if credit inquiry request information including a unique number associated with a credit card number and different from said credit card number has been received from said another electronic commerce server, and;
transmitting means for transmitting said credit inquiry request information to a predetermined another electronic commerce server if the credit inquiry processing is not to be performed by said electronic commerce server.

5. An electronic commerce server connected to another electronic commerce server over a network, comprising:
holding means for holding unique number information for performing credit inquiry by said electronic commerce server;
determining means for determining whether to perform credit inquiry processing by said electronic commerce server on the basis of said unique number and the information in said holding means if credit inquiry request information including a unique number associated with a credit card number and different from said credit card number has been received from said another electronic commerce server;
credit inquiry processing means for performing the credit inquiry processing on the basis of said credit inquiry request information if the credit inquiry processing is to be performed by said electronic commerce server, and;
transmitting means for transmitting a credit inquiry result which is a processing result of said credit inquiry processing means to said another electronic commerce server.

6. The electronic commerce server according to claim 4 or 5, wherein said unique number is encrypted, said electronic commerce server further comprising decrypting means for decrypting said encrypted unique number.

7. An electronic commerce method for an electronic commerce server connected to another electronic commerce server over a network, comprising the steps of:
holding information about a credit card company which performs credit inquiry;
identifying a credit card company which performs credit inquiry on the basis of said unique number and said credit card company information if credit inquiry request information including a unique number associated with a credit card number and different from said credit number has been received from said another electronic commerce server; and
transmitting said credit inquiry request information including said unique number to an electronic commerce server of the identified credit card company.

8. An electronic commerce method for an electronic commerce server connected to another electronic commerce server over a network, comprising the steps of:
holding unique number information for credit inquiry by said electronic commerce server;
determining whether to perform credit inquiry processing by said electronic commerce server on the basis of said unique number and the information in said holding means if credit inquiry request information including a unique number associated with a credit card number and different from said credit card number has been received from said another electronic commerce server; and
transmitting said credit inquiry request information to a predetermined another electronic commerce server if the credit inquiry processing is not to be performed by said electronic commerce server.

9. An electronic commerce method for an electronic commerce server connected to another electronic commerce server over a network, comprising the steps of:
holding unique number information for performing credit inquiry by said electronic commerce server;
determining whether to perform credit inquiry processing by said electronic commerce server on the basis of said unique number and the information in said holding means if credit inquiry request information including a unique number associated with a credit card number and different from said credit card number has been received from said another electronic commerce server;
performing the credit inquiry processing on the basis of said credit inquiry request information if the credit inquiry processing is to be performed by said electronic commerce server; and
transmitting a credit inquiry result which is a processing result of said credit inquiry processing step to said another electronic commerce server.

10. An electronic commerce system in which a first electronic commerce server, a second electronic commerce server, and an electronic commerce server of a credit card company are interconnected over a network, wherein,
said first electronic commerce server comprising:
credit inquiry request information generating means for generating credit inquiry request information including a unique number associated with a credit card number and different from said credit number; and
transmitting means for transmitting said credit inquiry request information to said second electronic commerce server,
said second electronic commerce server comprising:
holding means for holding information about a credit card company which performs credit inquiry;
identifying means for identifying a credit card company which performs credit inquiry on the basis of said unique number and said credit card company information if said credit inquiry request information has been received from said first electronic commerce server; and
transmitting means for transmitting said credit inquiry request information including said unique number to an electronic commerce server of the identified credit card company.

11. An electronic commerce system in which a first electronic commerce server and a second electronic commerce server are interconnected over a network, wherein,
said first electronic commerce server comprising:
credit inquiry request information generating means for generating credit inquiry request information including a unique number associated with a credit card number and different from said credit number; and
transmitting means for transmitting said credit inquiry request information to said second electronic commerce server,
said second electronic commerce server comprising:
holding means for holding unique number information for performing credit inquiry by said second electronic commerce server;
determining means for determining whether to perform credit inquiry processing by said second electronic commerce server on the basis of said unique number and the information in said holding means if credit inquiry request information has been received from said first electronic commerce server;
transmitting means for transmitting said credit inquiry request information to a predetermined another electronic commerce server if the credit inquiry processing is not to be performed by said second electronic commerce server;
credit inquiry processing means for performing credit inquiry processing on the basis of said credit inquiry request information if the credit inquiry processing is to be performed by said second electronic commerce server,; and
transmitting means for transmitting a credit inquiry result which is a processing result of said credit inquiry processing means to said first electronic commerce server.

12. A program for causing a computer to function as the electronic commerce server recited in any one of claims 1 through 6.

13. A recording medium recording a program for causing a computer to function as the electronic commerce server recited in any one of claims 1 through 6.

## Amended claims

### Amended claims under Art. 19.1 PCT

**1.** An electronic commerce server connected to another electronic commerce server over a network, comprising:
holding means for holding information about a credit card company which performs credit inquiry;
identifying means for identifying a credit card company which performs credit inquiry on the basis of said unique number and said credit card company information if credit inquiry request information including a unique number associated with a credit card number and different from said credit number has been received from said another electronic commerce server; and
transmitting means for transmitting said credit inquiry request information including said unique number to an electronic commerce server of the identified credit card company.

**2.** (After amendment) The electronic commerce server according to claim 16 wherein said unique number is encrypted, said electronic commerce server further comprising decrypting means for decrypting said encrypted unique number.

**3.** (After amendment) The electronic commerce server according to claim 16 is connected to a center.

**4.** An electronic commerce server connected to electronic commerce server;
determining means for determining whether to perform credit inquiry processing by said second electronic commerce server on the basis of said unique number and the information in said holding means if credit inquiry request information has been received from said first electronic commerce server;
transmitting means for transmitting said credit inquiry request information to a predetermined another electronic commerce server if the credit inquiry processing is not to be performed by said second electronic commerce server;
credit inquiry processing means for performing credit inquiry processing on the basis of said credit inquiry request information if the credit inquiry processing is to be performed by said second electronic commerce server,; and
transmitting means for transmitting a credit inquiry result which is a processing result of said credit inquiry processing means to said first electronic commerce server.

**12.** (After amendment) A program for causing a computer to function as the electronic commerce server recited in claim 1.

**13.** (After amendment) A recording medium recording a program for causing a computer to function as the electronic commerce server recited in claim 1.

**14.** (Addition) A program for causing a computer to function as the electronic commerce server recited in any one of claims 2 through 6.

**15.** (Addition) A recording medium recording a program for causing a computer to function as the electronic commerce server recited in any one of claims 2 through 6.

**16.** (Addition) The electronic commerce server according to claim 1 wherein said unique number is unique to each credit card and stored so that said unique number cannot be rewritten by any user.

**17.** (Addition) The electronic commerce method according to claim 7 wherein said unique number is unique to each credit card and stored so that said unique number cannot be rewritten by any user.

**18.** (Addition) The electronic commerce system according to claim 10 wherein said unique number is unique to each credit card and stored so that said unique number cannot be rewritten by any user.

**19.** (Addition) The program according to claim 12 wherein said unique number is unique to each credit card and stored so that said unique number cannot be rewritten by any user.

**20.** (Addition) The recording medium according to claim 13 wherein said unique number is unique to each credit card and stored so that said unique number cannot be rewritten by any user.
